Europäisches Patentamt

European Patent Office

Office européen des brevets

(11) Publication number: **0 533 147 A1**

## EUROPEAN PATENT APPLICATION

(21) Application number: **92115862.2**

(22) Date of filing: **16.09.92**

(51) Int. Cl.⁵: **A23D 7/00, A23D 9/00**

(30) Priority: **17.09.91 JP 236167/91**

(43) Date of publication of application:
**24.03.93 Bulletin 93/12**

(84) Designated Contracting States:
**BE DE FR GB NL**

(71) Applicant: **DAICEL CHEMICAL INDUSTRIES CO., LTD.**
**1-banchi, Teppo-cho**
**Sakai-shi Osaka 590(JP)**

(72) Inventor: **Yukami, Yoshikazu**
**940, Shinzaike, Aboshi-ku**
**Himeji-shi, Hyogo(JP)**
Inventor: **Sakow, Masami**
**36-9, Nakamachi 5-chome**
**Setagaya-ku, Tokyo(JP)**

(74) Representative: **Patentanwälte Grünecker, Kinkeldey, Stockmair & Partner**
**Maximilianstrasse 58**
**W-8000 München 22 (DE)**

(54) Water retentivity improver for fat and oil composition.

(57) (1) A use of an edible fine powder, e.g., a microfibrillated cellulose, a microfibrillated chitin, a microfibrillated chitosan, a microfibrillated hide and a microfibrillated silk fiber, as a water retentivity improver for a fat and oil composition which can solve the problems, such as syneresis, of a fat and oil composition, particularly a water-rich fat and oil composition such as a low-fat margarine to give a stable water-in-oil emulsified fat and oil composition.

(2) A method for retaining water in an emulsified fat and oil composition with an edible fine powder.

(3) A stable emulsified fat and oil composition comprising a fat and/or oil, from 17 to 70 % by weight, based on the composition, of water and from 0.5 to 5 % by weight, based on the composition, of an edible fine powder.

EP 0 533 147 A1

[Field of the Invention]

The present invention relates to a water retentivity improver for a fat and oil composition, particularly to a water retentivity improver for a water-in-oil fat and oil composition having a high water content. The present invention relates to a fat and oil composition containing a water retentivity improver.

[Background of the invention]

Although conventional margarine as a water-in-oil emulsified fat and oil composition generally has a water content of 17% by weight or below, a low-calorie margarine having a high water content has been also produced for specific purposes, e.g., from the nutritional standpoint. Further, a water-in-oil butter cream or icing has been also produced by adding a fructose solution to a shortening or a margarine and stirring the resulting mixture vigorously.

A fat and oil composition like a low-fat margarine is in the form of a water-in-oil emulsion having a lowered fat content and an enhanced water content as compared with those of common margarine. Because of the high water content, however, such a water-in-oil emulsion was difficult to keep stable and often caused the problem of water-oil phase separation during the preparation or storage of the emulsion. As the content of water as a dispersed phase is increased, the resultant emulsion becomes more and more unstable to cause the phase inversion into an oil-in-water emulsion or to accelerate demulsification. Even if an water-in-oil emulsion could be prepared, it also had the problems of causing syneresis during storage and giving a butter cream suffering from syneresis.

Further, a butter cream for confectionery and baking which is prepared from a processed fat and oil composition such as a shortening and a margarine has a structure of a water-in-oil emulsion, so that the butter cream has disadvantages that its taste depends on the melting point of the oily phase and that it is oily to the taste, while the taste of the aqueous phase can be hardly savored. When the water content is enhanced in order to improve the taste of such a butter cream or when the fat content is reduced from the nutritional standpoint, the resulting butter cream has a disadvantage of causing syneresis during storage.

As described above, many studies have been made on the emulsifier and process for permitting preparation of a stable water-in-oil emulsified fat and oil composition having a higher water content than that of common margarine or butter cream.

However, no sufficiently satisfactory result has been obtained as yet.

Additives for a water-in-oil emulsified fat and oil composition have been proposed (See Japanese Patent Publication-A Nos. 44840/1988 (published on February 25, 1988) and 191744/1991 (published on August 21, 1991). Furthermore, U.S. Patent No. 4,374,702 (published on February 22, 1983; ITT Corporation) discloses a microfibrillated cellulose (MFC), Japanese Patent Publication-A No. 86,640/1984 (published on May 18, 1984) discloses a microfibrillated chitin, Japanese Patent Publication-A No. 84,938/1984 (published on May 16, 1984) discloses a microfibrillated chitosan and European Patent Publication-A No. 0388854/1990 (published on September 26, 1990) discloses a microfibrillated hide.

[Summary of the invention]

An object of the present invention is to improve the water retentivity of a water-in-oil emulsified fat and oil composition having a high water content. The present inventors have extensively studied to find that this object can be attained by using an edible fine powder as a water retentivity improver for the fat and oil composition. The present invention has been accomplished on the basis of this finding.

Thus, the present invention provides a microfibrillated silk fiber as a water retentivity improver for a fat and oil composition.

The present invention also provides a mixture comprising or consisting essentially of a microfibrillated silk fiber and at least one edible fine powder selected from the group consisting of a microfibrillated cellulose, a microfibrillated chitin, a microfibrillated chitosan and a microfibrillated hide.

The present invention further provides a water retentivity improver composition for a fat and oil composition comprising a microfibrillated silk fiber as an essential component.

The present invention provides an emulsified fat and oil composition comprising or consisting essentially of a fat and/or an oil, water and an edible fine powder.

The amount of the water is preferably from 17 to 70 % by weight based on the composition and the amount of the edible fine powder is from 0.5 to 5 % by weight based on the composition.

Furthermore, the present invention provides a use of an edible fine powder, preferably a microfibrillated silk fiber, for retaining water in an emulsified fat and oil composition and a method for retaining water in an emulsified fat and oil composition with an edible fine powder.

Further scope and the applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

[Detailed Description of the Invention]

The edible fine powder according to the present invention includes, for example, a microfibrillated cellulose, a microfibrillated chitin, a microfibrillated chitosan, a microfibrillated hide and a microfibrillated silk fiber.

The microfibrillated cellulose, the microfibrillated chitin, the microfibrillated chitosan, the microfibrillated hide and the microfibrillated silk fiber to be used in the present invention are each a fine powder, and they are prepared by treating pulp or linter, chitin, chitosan, hide and silk fiber, respectively, with, e.g., a high-pressure homogenizer into a fine powder. The size of the fine powder is preferably from 0.1 to 50 $\mu$m and the Canadian freeness (See JIS P8121-1976; Testing Method for Freeness of Pulp) thereof is preferably 150 ml or below.

In the present invention, (1) a microfibrillated silk fiber, (2) a mixture comprising a microfibrillated silk fiber and at least one edible fine powder selected from the group consisting of a microfibrillated cellulose, a microfibrillated chitin, a microfibrillated chitosan and a microfibrillated hide and (3) a composition comprising a microfibrillated silk fiber as an essential component are employed as a water retentivity improver for a fat and oil composition.

In the use of an edible fine powder according to the present invention, a microfibrillated cellulose, a microfibrillated chitin, a microfibrillated chitosan, a microfibrillated hide, a microfibrillated silk fiber and a mixture thereof are employed as the edible fine powder for retaining water in an emulsified fat and oil composition.

In the method for retaining water in an emulsified fat and oil composition with an edible fine powder according to the present invention, a microfibrillated cellulose, a microfibrillated chitin, a microfibrillated chitosan, a microfibrillated hide, a microfibrillated silk fiber and a mixture thereof are employed as the edible fine powder.

The fat and oil to be used as the raw material for preparing an emulsified fat and oil composition improved in water retentivity by the use of the water retentivity improver according to the present invention is not particularly limited, but may be any edible one and examples thereof include vegetable fats and oils such as soybean oil, rapeseed oil, palm oil, corn oil, cotton seed oil, coconut oil and palm kernel oil; animal fats and oils such as beef tallow, lard, fish oil and milk fat; and fractionated fats and oils, transesterified fats and oils and hydrogenated fats and oils derived from these vegetable and animal ones. Further, mixtures of them may be used. The fat and oil composition according to the present invention prepared by the use of a fat and/or an oil as described above, water and the water retentivity improver as described above may take a solid, semifluid or liquid form depending upon the object.

In the preparation of a water-in-oil emulsified fat and oil composition having a high water content according to the present invention with the water retentivity improver according to the present invention, the improver is used in an amount of 0.5 to 5% by weight, preferably 1 to 2% by weight bassed on the whole composition. The improver is added as it is, or alternatively as a dispersed form in water to the fat and/or oil as the raw material.

If necessary, the combination use of the water retentivity improver according to the present invention with an other edible emulsifier may be conducted. Examples of the other edible emulsifier include fatty acid esters of glycerin, fatty acid esters of propylene glycol, fatty acid esters of sorbitan and lecithin.

The water-in-oil emulsified fat and oil composition according to the present invention has a water content of 17 to 70% by weight, preferably about 40% by weight based on the whole composition. For the preparation of the water-in-oil emulsified fat and oil composition according to the present invention, water is employed, for example, as it is, as a solution such as a fructose solution, or as a dispersion.

A water-in-oil emulsified fat and oil composition (such as a margarine and butter cream) having a high water content can be prepared by the use of the water retentivity improver of the present invention according to an ordinary industrial process. For example, such a margarine can be easily prepared by simultaneously adding the water retentivity improver of the present invention and a liquid to be an aqueous phase such as water to a fat component and/or an oil component during emulsifying to form a water-in-oil emulsion and treating the emulsion by an ordinary process involving quick cooling and kneading with ordinary equipment for preparing a margarine. Further, the butter cream can be prepared by adding the water retentivity improver of the present invention to a cream as a raw material and emulsifying water in the cream, or preferably by adding the water retentivity improver of the present invention to water to obtain a suspension comprising the water retentivity improver of the present invention as a dispersoid and water as a dispersion medium and emulsifying the suspension in the cream.

The water retentivity improver of the present invention can remarkably improve the stability of a fat and oil composition having a high water content during the preparation and storage thereof.

[Example]

The present invention will now be described in more detail by referring to the following Examples, though the present invention is not limited by them, but includes all embodiments so far as they do not deviate from the gist of the present invention.

Examples 1 to 6 and Comparative Examples 1 and 2:

A commercially available margarine having a high water content (27.7% by weight) was melted by heating, followed by the addition of any one of the water retentivity improvers listed in Table 1 in an amount of 1% by weight based on the solids. Water was further added thereto and the obtained mixture was stirred with a homomixer at a rate of 5000 rpm for 5 minutes and then solidified by quick cooling in a refrigerator. Water-in-oil fat and oil compositions having various water content were prepared. Each of the water-in-oil fat and oil compositions thus prepared was allowed to stand at 0°C for 3 days and thereafter observed the state of water separation. The maximum amount of water added, provided that syneresis was not observed, was determined for each water retentivity improver. A water absorption index was calculated from the maximum amount of water added and the weight of the fat and/or oil in the commercially available margarine used according to the following equation and the results are given in Table 1.

Numerical formula 1

$$\text{water absorption index} = \frac{\text{amount of water added (g)}}{\text{weight of fat and/or oil (g)}} \times 100$$

Table 1

|  | Water retentivity improver | Water absorption index |
|---|---|---|
| Ex. 1 | I | 30 |
| Ex. 2 | II | 11 |
| Ex. 3 | III | 59 |
| Ex. 4 | IV | 57 |
| Ex. 5 | V | 20 |
| Ex. 6 | VI | 30 |
| Comp. Ex. 1 | VII | -10 |
| Comp. Ex. 2 | none | 0 |

The water retentivity improvers listed in the Table 1 are as follows:
I: microfibrillated cellulose (a product of Daicel Chemical Industries, Ltd., Celish (registered trademark) FD-100S, fiber length: 400 to 500 μm, fiber diameter: 0.01 to 0.1 μm),
II: microfibrillated cellulose (a product of Daicel Chemical Industries, Ltd., Celish (registered trade-

4

mark) FD-100M, fiber length: 300 to 400 $\mu$m, fiber diameter: 20 to 30 $\mu$m),

III:    microfibrillated chitin (a product of Daicel Chemical Industries, Ltd., Tiara (registered trademark) MFC-500, fiber length: 300 to 400 $\mu$m, fiber diameter: 0.03 to 0.3 $\mu$m),

IV:    microfibrillated chitosan (fiber length: 300 to 400 $\mu$m, fiber diameter: 0.03 to 0.3 $\mu$m),

V:    microfibrillated hide (fiber length: 1500 to 2000 $\mu$m, fiber diameter: 0.1 to 0.2 $\mu$m),

VI:    microfibrillated silk fiber (fiber length: 400 to 600 $\mu$m, fiber diameter: 0.1 to 0.2 $\mu$m),

VII:    high-purity crystalline cellulose (a product of Asahi Chemical Industry Co., Ltd., Avicel PH-101).

(Results)

As shown in the Table 1, it was confirmed that the water retentivity improver of the present invention was remarkably effective in improving the water retentivity of a fat and oil composition.

Examples 7 to 13 and Comparative Example 3

A commercially available margarine having a high water content (27.7% by weight) was melted by heating, followed by the addition of any one of the water retentivity improvers listed in Table 2 in an amount (by weight based on the solids) specified therein. Water was further added thereto in such an amount as to give a water content specified in the Table 2. The obtained mixture was stirred with a homomixer at a rate of 5000 rpm for 5 minutes and solidified by quick cooling in a refrigerator. Each of the water-in-oil fat and oil compositions thus prepared was allowed to stand at 0°C for 3 days and evaluated for the state of water separation according to the following criteria. The results are given in Table 2. The number of each water retentivity improver listed in Table 2 coincides with that of each improver listed in Table 1.

Evaluation of the state of water separation:

◎:    no separation and smooth emulsion

o:    no separation

△:    slight separation

x:    separation

Table 2

| | Water retentivity improver | | Water content | State of separation |
|---|---|---|---|---|
| | No. | Amt. | | |
| Ex. 7 | I | 1.0% | 40% | ◎ |
| Ex. 8 | I | 5.0% | 70% | △ |
| Ex. 9 | II | 0.5% | 40% | o |
| Ex. 10 | II | 1.0% | 40% | ◎ |
| Ex. 11 | III | 0.5% | 40% | △ |
| Ex. 12 | IV | 1.0% | 40% | o |
| Ex. 13 | V | 1.0% | 40% | ◎ |
| Comp. Ex. 3 | none | | 40% | x |

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1.    A microfibrillated silk fiber as a water retentivity improver for a fat and oil composition.

2. The microfibrillated silk fiber as claimed in claim 1, wherein the microfibrillated silk fiber is in the form of a powder and the size thereof is from 0.1 to 50 μm and the Canadian freeness (See JIS P8121-1976; Testing Method for Freeness of Pulp) thereof is 150 ml or below.

3. A mixture comprising a microfibrillated silk fiber and at least one edible fine powder selected from the group consisting of a microfibrillated cellulose, a microfibrillated chitin, a microfibrillated chitosan and a microfibrillated hide.

4. The mixture as claimed in claim 3, wherein the microfibrillated silk fiber is in the form of a powder, the sizes of the powder of the microfibrillated silk fiber and the edible fine powder(s) are each from 0.1 to 50 μm, and the Canadian freenesses (See JIS P8121-1976; Testing Method for Freeness of Pulp) of the microfibrillated silk fiber and the edible fine powder(s) are each 150 ml or below.

5. The mixture as claimed in claim 3, wherein the mixture further contains an edible emulsifier other than the microfibrillated silk fiber and the edible fine powder.

6. A water retentivity improver composition for a fat and oil composition comprising a microfibrillated silk fiber as an essential component.

7. The water retentivity improver composition for a fat and oil composition as claimed in claim 6, wherein the microfibrillated silk fiber is in the form of a powder, the size thereof is from 0.1 to 50 μm and the Canadian freeness (See JIS P8121-1976; Testing Method for Freeness of Pulp) thereof is 150 ml or below.

8. The water retentivity improver composition for a fat and oil composition as claimed in claim 6, wherein the composition further contains an edible emulsifier other than the microfibrillated silk fiber.

9. An emulsified fat and oil composition comprising a fat and/or oil, water and an edible fine powder.

10. The emulsified fat and oil composition as claimed in claim 9, wherein the amount of the water is from 17 to 70 % by weight based on the composition and the amount of the edible fine powder is from 0.5 to 5 % by weight based on the composition.

11. The emulsified fat and oil composition as claimed in claim 9, wherein the edible fine powder is at least one member selected from the group consisting of a microfibrillated cellulose, a microfibrillated chitin, a microfibrillated chitosan, a microfibrillated hide and a microfibrillated silk fiber.

12. The emulsified fat and oil composition as claimed in claim 9, wherein the size of the edible fine powder is from 0.1 to 50 μm and the Canadian freeness (See JIS P8121-1976; Testing Method for Freeness of Pulp) thereof is 150 ml or below.

13. The emulsified fat and oil composition as claimed in claim 9, wherein the fat and/or oil is one member selected from the group consisting of vegetable fats and oils; animal fats and oils; fractionated fats and oils, transesterified fats and oils and hydrogenated fats and oils derived from the vegetable and animal ones; and mixtures of two or more of the aboive described fats and oils.

14. The emulsified fat and oil composition as claimed in claim 9, wherein the fat and/or oil is one member selected from the group consisting of soybean oil, rapeseed oil, palm oil, corn oil, cotton seed oil, coconut oil, palm kernel oil, beef tallow, lard, fish oil and milk fat; fractionated fats and oils, transesterified fats and oils and hydrogenated fats and oils derived from above fats and oils; and mixtures of two or more of the aboive described fats and oils.

15. The emulsified fat and oil composition as claimed in claim 9, wherein the composition further contains an edible emulsifier other than the edible fine powder.

16. The emulsified fat and oil composition as claimed in claim 15, wherein the edible emulsifier is one member selected from the group consisting of fatty acid esters of glycerin, fatty acid esters of propylene glycol, fatty acid esters of sorbitan and lecithin.

**17.** A use of an edible fine powder for retaining water in an emulsified fat and oil composition.

**18.** The use as claimed in claim 17, wherein the edible fine powder is a microfibrillated silk fiber.

**19.** The use as claimed in claim 17, wherein the emulsified fat and oil composition is a water-in-oil fat and oil composition having a high water content.

**20.** A method for retaining water in an emulsified fat and oil composition with an edible fine powder.

**21.** The method as claimed in claim 20, wherein the edible fine powder is a microfibrillated silk fiber.

**22.** The method as claimed in claim 20, wherein the emulsified fat and oil composition is a water-in-oil fat and oil composition having a high water content.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 156 021 (TERENCE W. RICHARDSON)<br><br>* column 3, line 30 - column 4, line 5; claims 1,9-11; example IX * | 9,11-17, 19,20,22 | A23D7/00<br>A23D9/00 |
| Y | --- | 1,6 | |
| Y | DATABASE WPIL<br>Week 8610,<br>Derwent Publications Ltd., London, GB;<br>AN 86-064967<br>& JP-A-61 015 896 (ASAHINA J) 23 January 1986<br>* abstract *<br>--- | 1,6 | |
| X | EP-A-0 352 907 (THE PROCTER & GAMBLE COMPANY)<br>* page 5, line 38 - page 6, line 39 *<br>* page 7, line 49 - line 51; claims 1-3,8,9 *<br>--- | 9,11,12, 17,20 | |
| X | DATABASE WPIL<br>Week 8434,<br>Derwent Publications Ltd., London, GB;<br>AN 84-210501<br>& JP-A-59 122 530 (TAIYO KAGAKU KK) 16 July 1984<br>* abstract *<br>--- | 9-11,13, 17,20 | TECHNICAL FIELDS SEARCHED (Int. Cl.5 )<br><br>A23D |
| X | DATABASE WPIL<br>Week 8416,<br>Derwent Publications Ltd., London, GB;<br>AN 84-097621<br>& JP-A-59 042 850 (DAICEL CHEM IND KK) 9 March 1984<br>* abstract *<br>--- | 9,11,13, 15,17,20 | |
| | -/-- | | |

The present search report has been drawn up for all claims

| Place of search | Date of completion of the search | Examiner |
|---|---|---|
| THE HAGUE | 09 DECEMBER 1992 | DEKEIREL M.J. |

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DATABASE WPIL Week 9141, Derwent Publications Ltd., London, GB; AN 91-298825 & JP-A-3 197 568 (KANEBO KK) 28 August 1991 * abstract * | 1 | |
| A | DATABASE WPIL Week 8947, Derwent Publications Ltd., London, GB; AN 89-344156 & JP-A-1 256 351 (TERUMO CORP) 12 October 1989 * abstract * | 1,6 | |
| A | DATABASE WPIL Week 9101, Derwent Publications Ltd., London, GB; AN 91-003860 & JP-A-2 281 079 (KANEBO KK) 16 November 1990 * abstract * | 1,6 | |
| A | DATABASE WPI Week 7927, Derwent Publications Ltd., London, GB; AN 79-49821B & JP-A-54 064 650 (ASAHI CHEMICAL IND KK) 24 May 1979 * abstract * | 9,17,20 | |
| A | DD-A-220 895 (VEB WISSENSCHAFTLICH-TECHNISCHES ZENTRUM) * the whole document * | 9-14,17, 20 | |

TECHNICAL FIELDS SEARCHED (Int. Cl.5)

The present search report has been drawn up for all claims

| Place of search | Date of completion of the search | Examiner |
|---|---|---|
| THE HAGUE | 09 DECEMBER 1992 | DEKEIREL M.J. |